# EUROPEAN PATENT SPECIFICATION

(11) **EP 3 639 958 B1**
(45) Date of publication and mention of the grant of the patent: **07.12.2022**
(21) Application number: 19203690.3
(22) Date of filing: 16.10.2019
(51) Int. Cl.: B23D 47/04, B27B 31/08, B27B 5/065

(54) **CUTTING MACHINE TO CUT PANELS MADE OF WOOD OR THE LIKE**
MASCHINE ZUM AUFTEILEN VON PLATTEN AUS HOLZ ODER DERGLEICHEN
MACHINE POUR DÉCOUPER DES PANNEAUX DE BOIS OU ANALOGUE

(30) Priority: 16.10.2018 IT 201800009494
(43) Date of publication of application: 22.04.2020
(73) Proprietor: BIESSE S.p.A., 61122 Pesaro (IT)
(72) Inventor: ANDREANI, Lorenzo, 61012 GRADARA (PU) (IT); CAMPANA, Marco, 61121 PESARO (PU) (IT); SALVIA, Massimo Paolo, 61122 PESARO (PU) (IT); SANTOLINI, Fernando, 61121 PESARO (PU) (IT)
(74) Representative: Manconi, Stefano

(56) References cited:
- EP-A1- 3 061 582
- DE-A1- 10 307 045
- US-A- 4 967 627

## Description

### CROSS-REFERENCE TO RELATED APPLICATIONS

This patent application claims priority from Italian patent application no. 102018000009494 filed on 16/10/2018.

### TECHNICAL FIELD

The present invention relates to a cutting machine to cut panels made of wood or the like, as per the preamble of claim 1.

### BACKGROUND ART

In the wood panel processing field, it is known to provide a cutting machine comprising a support frame defining a substantially horizontal support surface for at least one panel of wood or the like; a cutting station; a main pusher to advance at least one first panel in a first direction through the cutting station; a secondary pusher to advance at least one second panel in the first direction through the cutting station; and a cutting device mounted in the cutting station to move in a second direction and along a cutting surface perpendicular to the first direction so as to cut the panels.

The support surface is defined by a roller device mounted upstream of the cutting station, an output table mounted downstream of the cutting station, and a discharge trapdoor mounted between the roller device and the output table, downstream of the cutting surface, to discharge the swarf generated by the cutting device beneath the support surface.

The discharge trapdoor is movable between a raised closing position, in which the discharge trapdoor is coplanar with the support surface, and a lowered opening position, in which the discharge trapdoor disengages from the support surface to allow the swarf to fall.

The support frame further comprises two longitudinal guide members, which are fixed to the free ends of four vertical uprights parallel to the first direction.

The main pusher comprises a first feed carriage, which extends between the two longitudinal guide members, parallel to the second direction, and is provided with a plurality of gripping members, which are shaped so as to grip the first panel.

The first feed carriage further supports a pushing device suitable to push the components separated from the first panel and the second panel by the cutting device onto the output table, and the swarf generated by the cutting of the first panel and the second panel into the discharge trapdoor.

The secondary pusher comprises a second feed carriage, which is mounted beneath one of the longitudinal guide members and supports a gripping member, which extends in the first direction, is movable relative to the second feed carriage in the second direction, and is shaped so as to grip the second panel.

The known cutting machines of the type described above have some drawbacks mainly due to the fact that, when the pushing device of the main pusher is used to push the components separated from the second panel onto the output table and/or the swarf of the second panel into the discharge trapdoor, the main pusher cannot be used to feed the first panel to the cutting station and/or to load a new first panel into the relevant gripping members. Consequently, the known cutting machines of the type described above have relatively long work cycles and relatively low productivity. EP3061582A1 discloses a cutting machine as per the preamble of claim 1.

### DISCLOSURE OF INVENTION

The object of the present invention is to provide a cutting machine to cut panels made of wood or the like, which is free from the drawbacks described above and simple and inexpensive to implement.

According to the present invention, a cutting machine to cut panels made of wood or the like is provided as claimed in the appended claims.

### BRIEF DESCRIPTION OF THE DRAWINGS

The present invention will now be described with reference to the accompanying drawings, which illustrate a non-limiting embodiment thereof, wherein:
Figure 1 is a schematic perspective view, with parts removed for clarity, of a preferred embodiment of the cutting machine of the present invention;
Figure 2 is a schematic plan view, with parts removed for clarity, of the cutting machine in Figure 1;
Figure 3 is a schematic side view, with parts in section and parts removed for clarity, of the cutting machine in Figure 1;
Figures 4 and 5 are two schematic perspective views, on an enlarged scale and with parts removed for clarity, of a first detail of the cutting machine in Figure 1; and
Figures 6, 7 and 8 are three schematic perspective views, with parts removed for clarity, of a second detail of the cutting machine in Figure 1.

### BEST MODE FOR CARRYING OUT THE INVENTION

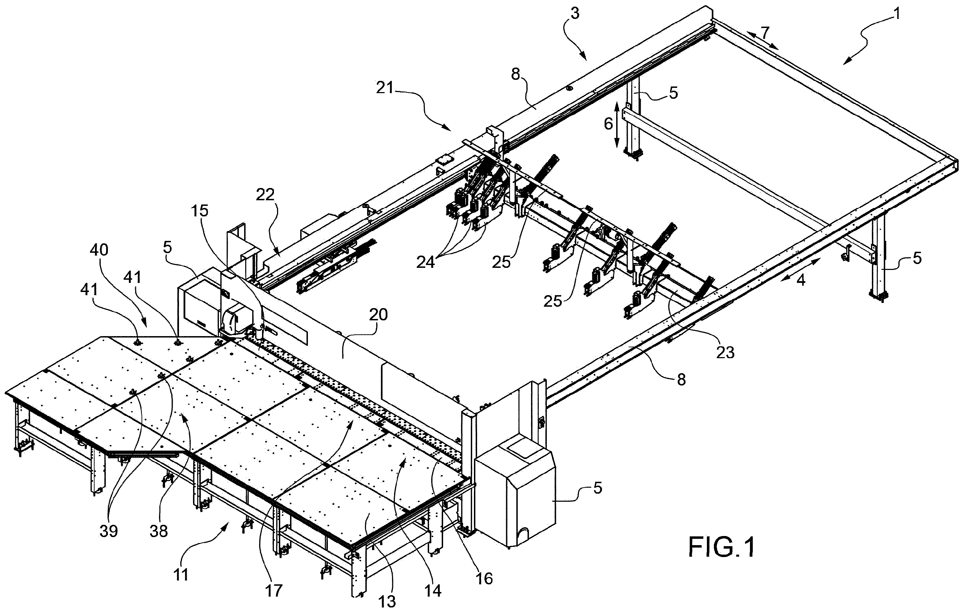

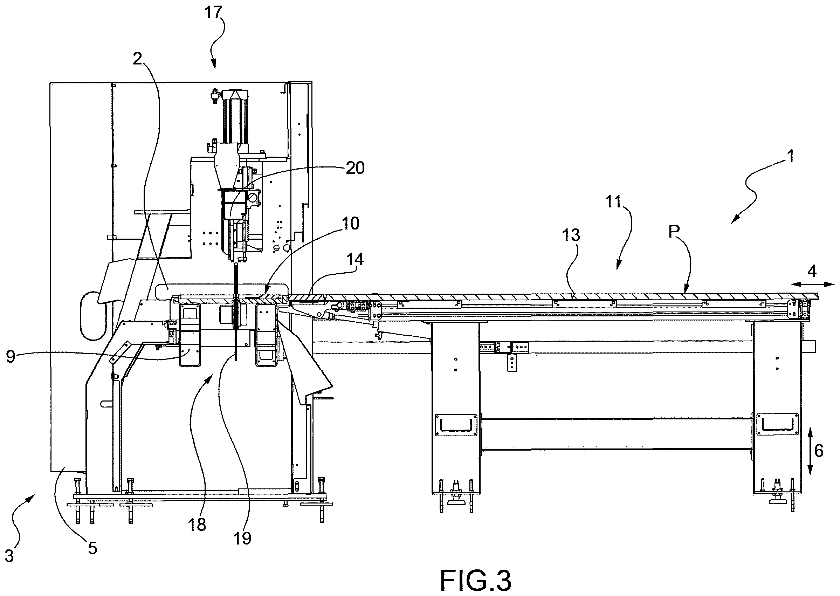

With reference to Figures 1, 2 and 3, number 1 indicates, as a whole, a cutting machine for cutting flat panels 2 made of wood or the like, substantially rectangular in shape.

The machine 1 comprises a gantry frame 3, which is substantially in the shape of a rectangular-based parallelepiped, extends in a horizontal direction 4, and is provided with four vertical edges, each defined by a respective upright 5 parallel to a vertical direction 6 transverse to the direction 4.

Each upright 5 is aligned with a corresponding upright 5 in direction 4 and with a corresponding upright 5 in a horizontal direction 7 orthogonal to directions 4 and 6.

The frame 3 also comprises two longitudinal guide members 8 parallel to each other, each of which extends in direction 4 and connects two corresponding uprights 5 to each other; a cross member 9, which extends in direction 7, is bounded by a flat upper face 10 perpendicular to direction 6, and connects two of the four uprights 5 to each other; and two support devices 11, which are arranged on opposite sides of the cross member 9 in direction 4, and define, together with the face 10, a substantially horizontal support surface P for the panels 2.

The device 11 upstream of the cross member 9 comprises a plurality of roller bars 12 parallel to each other and to direction 4, and the device 11 downstream of the cross member 9 comprises an output table 13.

The frame 3 is further provided with a discharge trapdoor 14 mounted between the cross member 9 and the table 13 to discharge the swarf generated by the cutting of the panels 2 beneath the surface P.

In this case, the trapdoor 14 comprises two support plates 15, 16, which are aligned with each other in direction 7, and are movable independently of one another, under the thrust of respective actuating devices (not shown), between respective raised closing positions, in which the plates 15, 16 are coplanar with the surface P, and respective lowered opening positions, in which the plates 15, 16 allow the swarf to fall below the surface P.

In this case, the plate 15 has a length, as measured parallel to direction 7, less than the length of the plate 16, also as measured parallel to direction 7.

The machine 1 also comprises a cutting station 17, which is formed next to the cross member 9 and the respective uprights 5, and is provided with a cutting assembly 18 of a known type coupled in a known manner to the cross member 9 so as to move rectilinearly in direction 7 relative to the frame 3 and under the thrust of a known, not shown actuating device.

The cutting assembly 18 has a blade 19 and an engraver (not shown) mounted so as to rotate about respective axes of rotation, which are parallel to each other and to direction 4, and to move rectilinearly in direction 6 between respective lowered rest positions, in which the blade 19 and the engraver (not shown) are arranged below the surface P to allow the panels 2 to be fed along the surface P, and respective raised operative positions, in which the blade 19 and the engraver (not shown) protrude through the cross member 9 above the surface P in order to cut the panels 2.

The blade 19 and the engraver (not shown) are also moved by the assembly 18 along a cutting surface T formed through the cross member 9 perpendicularly to direction 4 with reciprocating rectilinear motion comprising a forward stroke, in which the engraver (not shown), arranged in front of the blade 19 in the feeding direction 7 of the assembly 18, performs the engraving of the panel 2 arranged on the surface P and the blade 19 cuts the panels 2, and a return stroke.

The assembly 18 cooperates with a pressure device 20 of a known type, which extends above the surface P in direction 7, and is movable, relative to the frame 3, in direction 6 between a raised rest position and a lowered operative position, in which the panels 2 are locked on the surface P and then cut by the assembly 18 parallel to direction 7.

The machine 1 also comprises a main pusher 21 and a secondary pusher 22, which are configured to feed the panels 2 along the surface P and through the station 17 back and forth in direction 4.

The main pusher 21 comprises a motorized carriage 23, which is mounted above the aforementioned roller bars 12, extends between the two longitudinal members 8 in direction 7, and is movable along the longitudinal members 8 in direction 4 under the thrust of a known, not shown actuating device.

The carriage 23 supports a plurality of gripping members 24, which are distributed along the carriage 23 in direction 7, and are movable along the carriage 23 in direction 7 during set-up of the pusher 21.

Each member 24 is also movable between a raised rest position and a lowered operative position and is shaped like tongs comprising a lower jaw and an upper jaw, which are movable relative to one another between a gripping position and a releasing position of at least one panel 2.

The pusher 21 is also provided with two pushing bars 25 mounted along the carriage 23 in direction 7.

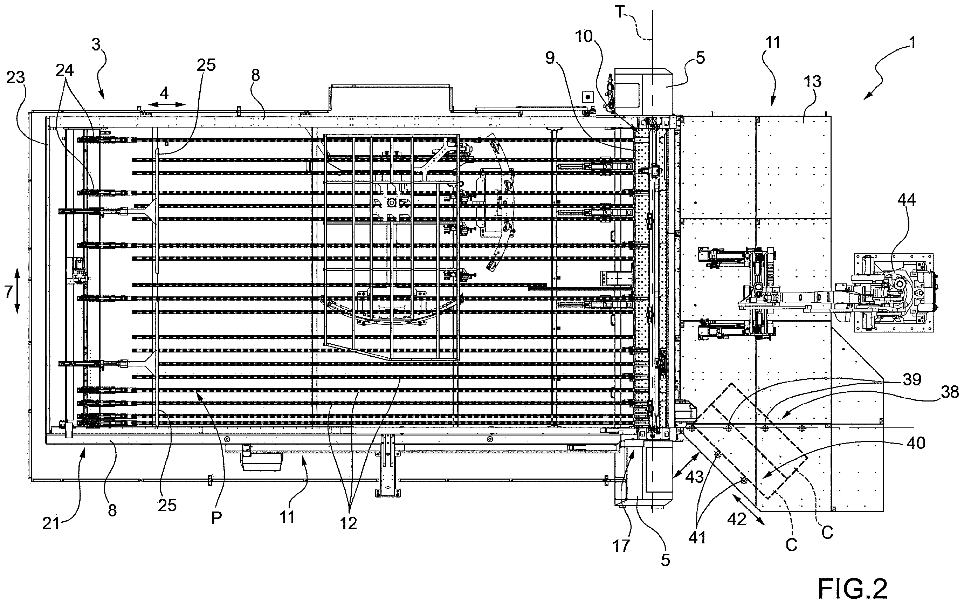

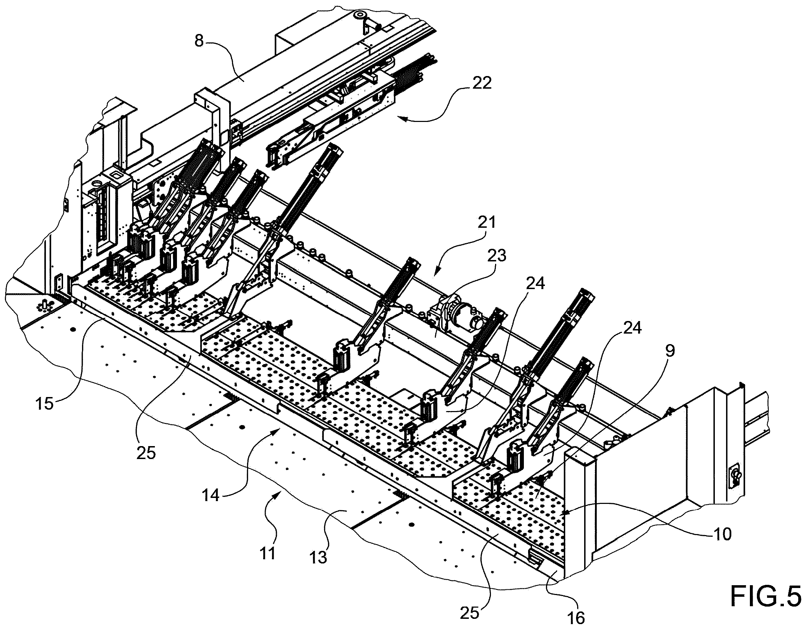

Each bar 25 is movable between a raised rest position (Figure 1), in which the bar 25 is arranged above the members 24, and a lowered operative position (Figure 5), in which the bar 25 is arranged in front of the members 24 in direction 4 so as to feed the components C (Figure 2) separated from the panels 2 by the blade 19 onto the table 13 and/or to push the swarf into the trapdoor 14.

With regard to the above, it should be pointed out that the uprights 5 associated with the station 17 laterally delimit in direction 7 a working area of the pusher 21 and the trapdoor 14.

The secondary pusher 22 comprises a motorized carriage 26, which extends beneath one of the longitudinal members 8 and is movable along the longitudinal member 8 in direction 4 under the thrust of a known, not shown actuating device.

The carriage 26 supports a first horizontal slide 27, which is slidably coupled to the carriage 26 so as to move relative to the carriage 26 in direction 7, and carries a gripping member 28 for at least one panel 2.

The member 28 has a substantially parallelepiped elongated shape, extends in direction 4, and is defined by tongs comprising a lower jaw 29 and an upper jaw 30, which are movable relative to one another between a gripping position and a releasing position of at least one panel 2.

The member 28 is associated with a first pushing member 31, which has an elongated shape, extends in direction 4, and comprises two pushing arms 32 arranged on opposite sides of the member 28 in direction 7.

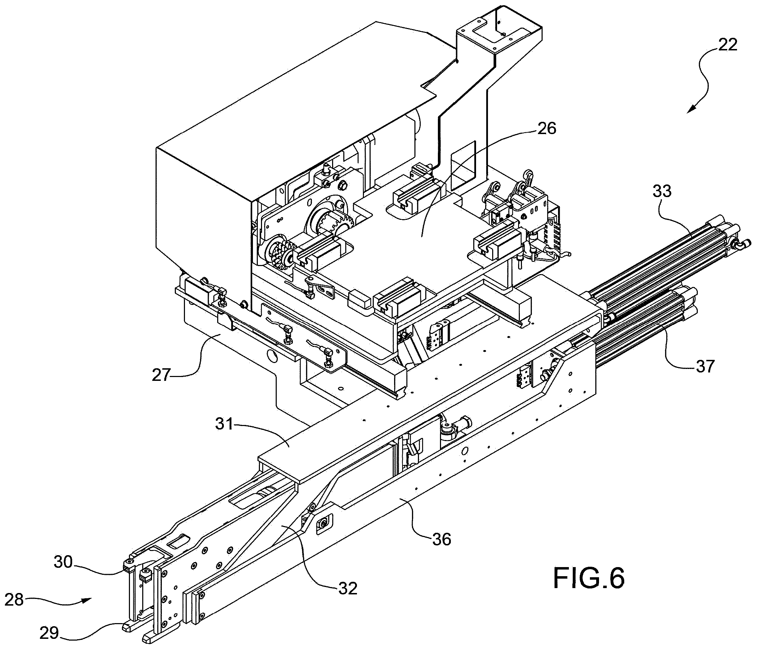

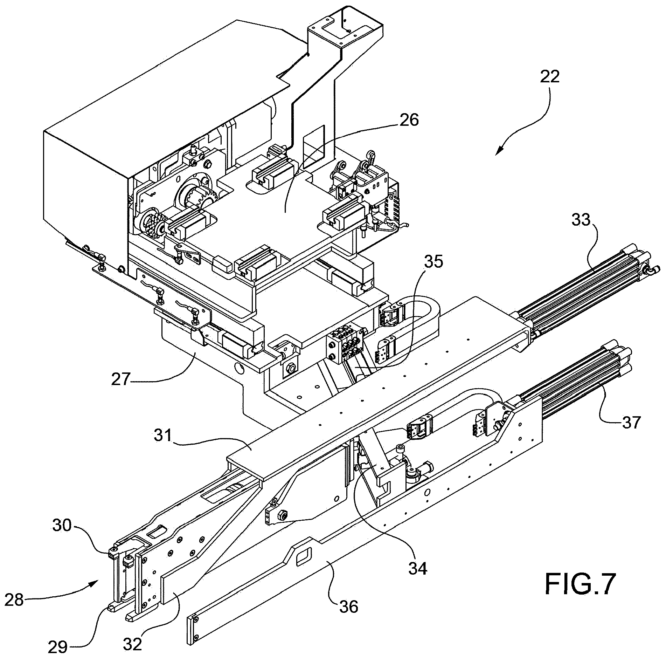

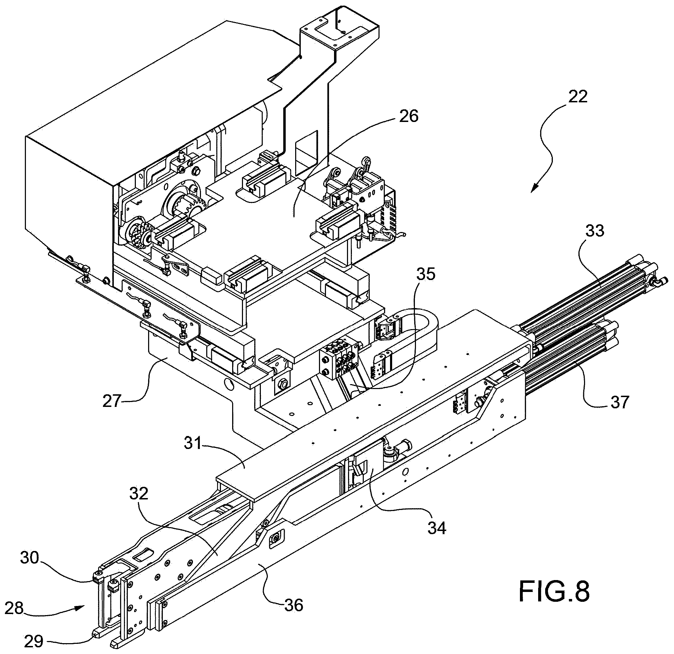

The member 31 is slidably coupled to the member 28 so as to move, relative to the member 28 and under the thrust of an actuator cylinder 33, in direction 4 between a retracted position (Figures 6 and 7), in which the member 28 projects from the member 31 in direction 4, and an extracted position (Figure 8), in which the arms 32 project from the member 28 in the direction 4 so as to feed the components C separated from the panels 2 by the blade 19 onto the table 13 and/or to push the swarf into the trapdoor 14.

The pusher 22 also comprises a second horizontal slide 34 slidably coupled to the slide 27 so as to move, relative to the slide 27 and under the thrust of an actuator cylinder 35, in an inclined feed direction between the directions 4 and 7.

The slide 34 supports a second pushing member 36, which has an elongated flat shape, extends in direction 4 parallel to the member 28, and is moved by the cylinder 35 between a rest position (Figures 6 and 8) and an operative position (Figure 7), in which the member 36 moves away from the member 28 and cooperates with the member 28 in feeding the panels 2 along the frame 3 in direction 4.

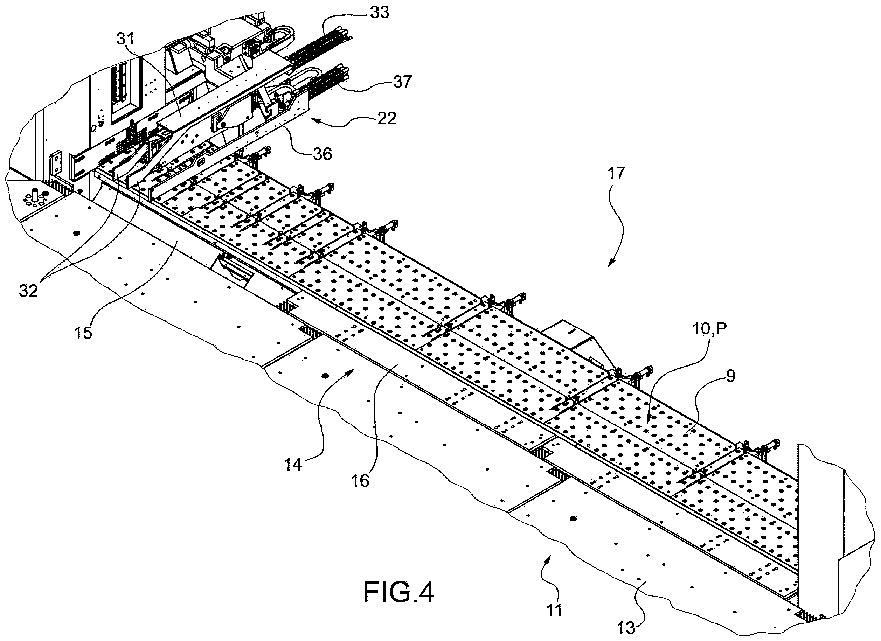

The member 36 is also slidably coupled to the slide 34 so as to move, relative to the slide 34 and under the thrust of an actuator cylinder 37, in direction 4 between a retracted position (Figures 6, 7 and 8), in which the member 28 projects from the member 36 in direction 4, and an extracted position (Figure 4), in which the member 36 projects from the member 28 in direction 4 and cooperates with the member 31 in feeding the components C separated from the panels 2 by the blade 19 onto the table 11 and/or in pushing the swarf into the trapdoor 14.

With regard to the above, it should be pointed out that the plate 15 is substantially aligned with the secondary pusher 22 in direction 4 and the plate 16 is substantially aligned with the main pusher 21 in the direction 4.

The table 13 is also provided with a first end-of-stroke device 38 comprising a plurality of pin members 39, which are aligned with each other in direction 4 and are movable between respective raised positions, in which the members 39 project above the surface P, and respective lowered positions, in which the members 39 are at most coplanar with the surface P.

When arranged in their raised positions, the members 39 allow a correct positioning of the panels 2 in direction 7.

The table 13 is also provided with a second end-of-stroke device 40 comprising a plurality of pin members 41, which are aligned with each other in a horizontal direction 42 inclined relative to directions 4 and 7, and are movable between respective raised positions, in which the members 41 project above the surface P, and respective lowered positions, in which the members 41 are at most coplanar with the surface P.

When arranged in their raised positions, the members 41 allow a correct positioning of the panels 2 in a horizontal direction 43 transverse to direction 42.

The machine 1 is also provided with a robotic manipulator 44, which is arranged downstream of the table 13 in direction 4, and is configured to hold and move the components C separated from the panels 2 by the blade 19.

The machine 1 has some advantages mainly due to the fact that:
the two plates 15, 16 of the trapdoor 14 allow the cutting assembly 18 to cut the panel 2 held by the main pusher 21, even when the plate 15 is arranged in its open position to discharge the swarf of the panel 2 held by the secondary pusher 22 beneath the surface P, and to cut the panel 2 held by the secondary pusher 22, even when the plate 16 is arranged in its open position to discharge the swarf of the panel 2 held by the main pusher 21 beneath the surface P;
the pushing members 31, 36 associated with the gripping member 28 allow the components C separated by the blade 19 from the panel 2 held by the secondary pusher 22 to be fed onto the table 13 and/or the swarf of the panel 2 held by the secondary pusher 22 to be discharged into the trapdoor 14, thus avoiding the use of the pushing bars 25 and therefore of the main pusher 21; and
the end-of-stroke device 40 allows the manipulator 44, unable to correctly position more than one component C against the end-of-stroke device 38 in direction 7, firstly to correctly position at least two components C against the pin members 41 in direction 43, and therefore to correctly feed the two components C to the gripping members 24 of the main pusher 21 and to the gripping member 28 of the secondary pusher 22 parallel to direction 4 and/or to correctly position a single component C against the pin members 41 when the working area of the pusher 21 is occupied and prevents the positioning of the component C against the pin members 39.

## Claims

1. A cutting machine to cut panels (2) made of wood or the like, the machine comprising a cutting station (17); a main pusher (21) to move at least one first panel (2) through the cutting station (17) in a first direction (4); a secondary pusher (22) to move at least one second panel (2) through the cutting station (17) in the first direction (4); a cutting assembly (18), which is mounted in the cutting station (17) and is movable in a second direction (7) and along a cutting surface (T), which are substantially perpendicular to the first direction (4), so as to cut the panels (2); and a support frame (3), which defines a support surface (P) for said first and second panels (2); the main pusher (21) being provided with a plurality of first gripping members (24), which are shaped like tongs so as to grip the first panel (2), and with a first pushing device (25), which is configured to push at least one component (C) separated from the first panel (2) and/or swarf of the first panel (2) downstream of the cutting surface (T); and the secondary pusher (22) being provided with at least one second gripping member (28), which is shaped like tongs so as to grip the second panel (2), and with a second pushing device (31, 36) to push at least one component (C) separated from the second panel (2) and/or swarf of the second panel (2) downstream of the cutting surface (T); the second pushing device (31, 36) comprising a first pushing member (31); and the second gripping member (28) and the first pushing member (31) being movable relative to one another between a retracted position, in which the second gripping member (28) projects from the first pushing member (31) in the first direction (4), and an extracted position, in which the first pushing member (31) projects from the second gripping member (28) in the first direction (4); and being **characterized in that** the second pushing device (31, 36) further comprises a second pushing member (36); the second gripping member (28) and the second pushing member (36) being movable relative to one another between a retracted position, in which the second gripping member (28) projects from the second pushing member (36) in the first direction (4), and an extracted position, in which the second pushing member (36) projects from the second gripping member (28) in the first direction (4); and **in that** the first pushing member (31) extends around the second gripping member (28).

2. The cutting machine according to claim 1, wherein the support frame (3) comprises a discharge trapdoor (14), which is mounted downstream of the cutting surface (T) so as to discharge swarf under the support surface (P) and extends parallel to the cutting surface (T) in the second direction (7), and an output table (13), which is mounted downstream of the discharge trapdoor (14) so as to receive the components (C) separated from said first and second panels (2) by means of the cutting assembly (18).

3. The cutting machine according to claim 2, wherein the second pushing device (31, 36) is mounted on the secondary pusher (22) so as to push the components (C) separated from the second panel (2) onto the output table (13) and the swarf of the second panel (2) into the discharge trapdoor (14).

4. The cutting machine according to any one of the preceding claims, wherein the support frame (3) further comprises two longitudinal guide members (8), which are parallel to one another and to the first direction (4) and are engaged by the main pusher (21) in a sliding manner.

5. The cutting machine according to claim 4, wherein the secondary pusher (22) is mounted so as to slide on one of said longitudinal guide members (8).

6. The cutting machine according to any one of the preceding claims, wherein the second gripping member (28) is mounted so as to move in the second direction (7).

7. The cutting machine according to any one of the preceding claims, wherein the second gripping member (28) and the second pushing member (36) are movable relative to one another in the second direction (7) or in a third direction, which is inclined relative to said first and second directions (4, 7).

## Patentansprüche

1. Maschine zum Schneiden von Platten (2) aus Holz oder dergleichen, umfassend eine Schneidstation (17); einen Hauptschieber (21), um zumindest eine erste Platte (2) in eine erste Richtung (4) durch die Schneidstation (17) zu bewegen; einen Sekundärschieber (22), um zumindest eine zweite Platte (2) in die erste Richtung (4) durch die Schneidstation (17) zu bewegen; eine Schneidanordnung (18), welche an der Schneidstation (17) angebracht ist und in eine zweite Richtung (7) und entlang einer Schneidfläche (T), welche im Wesentlichen rechtwinklig zur ersten Richtung (4) sind, bewegbar ist, um die Platten (2) zu schneiden; und einen Stützrahmen (3), welcher eine Stützfläche (P) für besagte erste und zweite Platten (2) definiert; der Hauptschieber (21) ist ausgestattet mit einer Vielzahl an ersten Greifelementen (24), welche wie Zungen geformt sind, um die erste Platte (2) zu ergreifen, und mit einer ersten Schiebeeinrichtung (25), welche dazu eingerichtet ist zumindest eine von der ersten Platte (2) abgetrennte Komponenten (C) und/oder Späne der ersten Platte (2) abwärts der Schneidfläche (T) zu schieben; und der Sekundärschieber (22) ist ausgestattet mit zumindest einem zweiten Greifelement (28), welches wie Zungen geformt ist, um die zweite Platte (2) zu ergreifen, und mit einer zweiten Schiebeeinrichtung (31, 36) welche dazu eingerichtet ist zumindest eine von der zweiten Platte (2) abgetrennte Komponenten (C) und/oder Späne der zweiten Platte (2) abwärts der Schneidfläche (T) zu schieben; die zweite Schiebeeinrichtung (31, 36) umfasst ein erstes Drückelement (31); und das zweite Greifelement (28) und das erste Drückelement (31) sind relativ zueinander zwischen einer zurückgezogenen Stellung, in welcher das zweite Greifelement (28) in die erste Richtung (4) vom ersten Drückelement (31) hervorsteht, und einer ausgefahrenen Stellung, in welcher das erste Drückelement (31) in die erste Richtung (4) vom zweiten Greifelement (28) hervorsteht, bewegbar; und **dadurch gekennzeichnet, dass**
die zweite Schiebeeinrichtung (31, 36) ferner ein zweites Drückelement (36) umfasst; das zweite Greifelement (28) und das zweite Drückelement (36) sind relativ zueinander zwischen einer zurückgezogenen Stellung, in welcher das zweite Greifelement (28) in die erste Richtung (4) vom zweiten Drückelement (36) hervorsteht, und einer ausgefahrenen Stellung, in welcher das zweite Drückelement (36) in die erste Richtung (4) vom zweiten Greifelement (28) hervorsteht, bewegbar; und, dass sich das erste Drückelement (31) um das zweite Greifelement (28) herum erstreckt.

2. Maschine nach Anspruch 1, wobei der Stützrahmen (3) eine Auswurffalltür (14), welche abwärts der Schneidfläche (T) angebracht ist, um Späne unterhalb der Stützfläche (P) auszuwerfen und welche sich parallel zur Schneidfläche (T) in die zweite Richtung (7) erstreckt, und einen Ausgabetisch (13), welcher abwärts der Auswurffalltür (14) angeordnet ist, um die von besagter erster und zweiter Platte (2) mittels der Schneidanordnung (18) abgetrennten Komponenten (C) zu empfangen, umfasst.

3. Maschine nach Anspruch 2, wobei die zweite Schiebeeinrichtung (31, 36) am Sekundärschieber (22) montiert ist, um die von der zweiten Platte (2) abgetrennten Komponenten (C) auf den Ausgabetisch (13) und die Späne der zweiten Platte (2) in die Auswurffalltür (14) zu schieben.

4. Maschine nach einem der vorhergehenden Ansprüche, wobei der Stützrahmen (3) ferner zwei Längsführungsträger (8) umfasst, welche parallel zueinander und zur ersten Richtung (4) sind und durch den Hauptschieber (21) gleitend in Eingriff genommen sind.

5. Maschine nach Anspruch 4, wobei der Sekundärschieber (22) so montiert ist, dass er auf einem der besagten Längsführungsträger (8) gleitet.

6. Maschine nach einem der vorhergehenden Ansprüche, wobei das zweite Greifelement (28) so montiert ist, dass es sich in die zweite Richtung (7) bewegt.

7. Maschine nach einem der vorhergehenden Ansprüche, wobei das zweite Greifelement (28) und das zweite Drückelement (36) relativ zueinander in die zweite Richtung (7) oder eine dritte Richtung, welche relativ gegenüber besagter erster Richtung (4) und zweiter Richtung (7) geneigt ist, bewegbar sind.

## Revendications

1. Machine de découpe pour découper des panneaux (2) composés de bois ou analogue, la machine comprenant un poste de découpe (17) ; un poussoir principal (21) pour déplacer au moins un premier panneau (2) à travers le poste de découpe (17) dans une première direction (4) ; un poussoir secondaire (22) pour déplacer au moins un deuxième panneau (2) à travers le poste de découpe (17) dans la première direction (4) ; un ensemble de découpe (18), qui est monté dans le poste de découpe (17) et est mobile dans une deuxième direction (7) et le long d'une surface de découpe (T), qui sont sensiblement perpendiculaires à la première direction (4), de manière à découper les panneaux (2) ; et un cadre de support (3), qui définit une surface de support (P) pour lesdits premier et deuxième panneaux (2) ; le poussoir principal (21) étant pourvu d'une pluralité de premiers organes de préhension (24), qui ont la forme de pinces de manière à saisir le premier panneau (2), et d'un premier dispositif de poussée (25), qui est configuré pour pousser au moins un composant (C) séparé du premier panneau (2) et/ou des copeaux du premier panneau (2) en aval de la surface de découpe (T) ; et le poussoir secondaire (22) étant pourvu d'au moins un deuxième organe de préhension (28), qui a la forme de pinces de manière à saisir le deuxième panneau (2), et d'un deuxième dispositif de poussée (31, 36) pour pousser au moins un composant (C) séparé du deuxième panneau (2) et/ou des copeaux du deuxième panneau (2) en aval de la surface de découpe (T) ; le deuxième dispositif de poussée (31, 36) comprenant un premier organe de poussée (31) ; et le deuxième organe de préhension (28) et le premier organe de poussée (31) étant mobiles l'un par rapport à l'autre entre une position rétractée, dans laquelle le deuxième organe de préhension (28) se projette depuis le premier organe de poussée (31) dans la première direction (4), et une position extraite, dans laquelle le premier organe de poussée (31) se projette depuis le deuxième organe de préhension (28) dans la première direction (4) ; et étant **caractérisée en ce que** le deuxième dispositif de poussée (31, 36) comprend en outre un deuxième organe de poussée (36) ; le deuxième organe de préhension (28) et le deuxième organe de poussée (36) étant mobiles l'un par rapport à l'autre entre une position rétractée, dans laquelle le deuxième organe de préhension (28) se projette depuis le deuxième organe de poussée (36) dans la première direction (4), et une position extraite, dans laquelle le deuxième organe de poussée (36) se projette depuis le deuxième organe de préhension (28) dans la première direction (4) ; et **en ce que** le premier organe de poussée (31) s'étend autour du deuxième organe de préhension (28).

2. Machine de découpe selon la revendication 1, dans laquelle le cadre de support (3) comprend une trappe d'évacuation (14), qui est montée en aval de la surface de découpe (T) de manière à évacuer les copeaux sous la surface de support (P) et s'étend parallèlement à la surface de découpe (T) dans la deuxième direction (7), et une table de sortie (13), qui est montée en aval de la trappe d'évacuation (14) de manière à recevoir les composants (C) séparés desdits premier et deuxième panneaux (2) au moyen de l'ensemble de découpe (18).

3. Machine de découpe selon la revendication 2, dans laquelle le deuxième dispositif de poussée (31, 36) est monté sur le poussoir secondaire (22) de manière à pousser les composants (C) séparés du deuxième panneau (2) sur la table de sortie (13) et les copeaux du deuxième panneau (2) dans la trappe d'évacuation (14).

4. Machine de découpe selon l'une quelconque des revendications précédentes, dans laquelle le cadre de support (3) comprend en outre deux organes de guidage longitudinaux (8), qui sont parallèles l'un à l'autre et à la première direction (4) et sont mis en prise par le poussoir principal (21) d'une manière coulissante.

5. Machine de découpe selon la revendication 4, dans laquelle le poussoir secondaire (22) est monté de manière à coulisser sur l'un desdits organes de guidage longitudinaux (8).

6. Machine de découpe selon l'une quelconque des revendications précédentes, dans laquelle le deuxième organe de préhension (28) est monté de manière à se déplacer dans la deuxième direction (7).

7. Machine de découpe selon l'une quelconque des revendications précédentes, dans laquelle le deuxième organe de préhension (28) et le deuxième organe de poussée (36) sont mobiles l'un par rapport à l'autre dans la deuxième direction (7) ou dans une troisième direction, qui est inclinée par rapport auxdites première et deuxième directions (4, 7).
